# FASCICULE DE BREVET EUROPEEN

(11) **EP 1 756 228 B1**
(45) Date de publication et mention de la délivrance du brevet: **14.03.2018**
(21) Numéro de dépôt: 05746719.3
(22) Date de dépôt: 26.04.2005
(51) Int. Cl.: C08L 95/00, C08K 5/17, C08L 53/02, C08K 5/3462

(54) **COMPOSITION BITUME/POLYMERE RÉSISTANT AUX AGRESSIONS CHIMIQUES ET REVÊTEMENT OBTENU À PARTIR D'UN ENROBÉ COMPRENANT CETTE COMPOSITION**
GEGEN CHEMISCHEN ANGRIFF RESISTENTE BITUMEN-/POLYMER-ZUSAMMENSETZUNG UND AUS EINEM BESCHICHTUNGSMATERIAL MIT BESAGTER ZUSAMMENSETZUNG ERHALTENE BESCHICHTUNG
CHEMICAL-ATTACK-RESISTANT BITUMEN/POLYMER COMPOSITION AND COATING OBTAINED FROM A COATING MATERIAL COMPRISING SAID COMPOSITION

(30) Priorité: 26.04.2004 FR 0450781
(43) Date de publication de la demande: 28.02.2007
(73) Titulaire: TOTAL MARKETING SERVICES, 92800 Puteaux (FR)
(72) Inventeur: CHAVEROT, Pierre, F-42800 Sainte Croix en Jarez (FR); PONSARDIN, Mickaël, F-69008 Lyon (FR)
(74) Mandataire: Cabinet Plasseraud
(86) Numéro de dépôt international: PCT/FR2005/050278
(87) Numéro de publication internationale: WO 2005/105926

(56) Documents cités:
- WO-A-00/68329
- WO-A-96/15193
- WO-A-97/14726
- WO-A1-02/16499
- GB-A- 1 496 033
- US-A- 3 457 090
- US-A- 3 497 371
- US-A- 5 362 314
- US-A- 5 364 894
- US-A- 5 788 756
- US-B1- 6 494 944
- HWANG ET AL: "Geochemical comparison of reservoir solid bitumens with diverse origins", ORGANIC GEOCHEMISTRY, PERGAMON, AMSTERDAM, NL, vol. 29, no. 1-3, 1 January 1998 (1998-01-01), pages 505-517, XP005812732, ISSN: 0146-6380, DOI: 10.1016/S0146-6380(98)00078-3

## Description

L'invention concerne l'utilisation d'additifs utiles dans la préparation de compositions bitume/polymère, pour leur conférer une résistance améliorée aux agressions chimiques.

L'invention concerne également les compositions bitume/ polymère, ainsi obtenues et leur utilisation comme liant bitumineux pour la réalisation de revêtements, notamment de revêtement superficiels routiers, d'enrobés bitumineux ou de revêtements d'étanchéité, résistants aux agressions chimiques.

Il est connu d'utiliser des compositions bitume/polymère, comme revêtements de surfaces diverses et, en particulier, comme revêtements superficiels routiers, à condition que ces compositions présentent en combinaison un certain nombre de caractéristiques mécaniques, exposées en détail, par exemple, dans EP 739 386.

Pour maintenir et/ou améliorer les caractéristiques et notamment les propriétés mécaniques d'un bitume conventionnel, on utilise depuis longtemps des compositions bitume/polymère dans lesquelles le bitume (formé d'un ou plusieurs types de bitumes) est mélangé avec un ou plusieurs polymères fonctionnels, notamment des élastomères (e.g. polyoléfines, Styrène-Butadiène, Styrène-Butadiène-Styrène,caoutchouc butyle, copolymère éthylène/acétate, etc). Les compositions bitume/polymère en outre et selon les cas peuvent être éventuellement réticulées chimiquement in situ, à l'aide d'un agent de couplage ou de réticulation, par exemple le soufre ou l'un au moins de ses précurseurs.

Des caractéristiques mécaniques optimisées sont notamment cruciales pour les applications revêtements routiers.

C'est ainsi que EP 739 386 décrit de très nombreuses compositions bitume/polymère présentant une stabilité et des propriétés mécaniques améliorées, ainsi que des procédés de préparation de ces compositions.

Au-delà des propriétés mécaniques, il convient de tenir compte pour les bitumes, de leur sensibilité à certains agents chimiques. Ces agents chimiques agressifs peuvent être, par exemple des solvants hydrocarbonés, en particulier pétroliers (e.g. kérosène, gazole, essences) ou bien encore des produits, en particulier des fluides, utilisés pour le déverglaçage et/ou le dégivrage et/ou le déneigement des avions et des zones de roulage. Ces fluides sont e.g. des solutions aqueuses salines de potassium, sodium, magnésium et/ou calcium, et/ou des compositions à base d'éthylène glycol et/ou à base de propylène glycol.

L'effet agressif de tels agents chimiques se cumule avec les contraintes de trafic intense, notamment de lourds véhicules, et des intempéries; ce qui a pour effet néfaste d'accroître la dégradation rapide des chaussées, en particulier des chaussées aéronautiques.

Cette sensibilité des bitumes aux agressions chimiques est plus spécialement gênante pour les bitumes constituant par exemple les tarmacs et les revêtements de pistes d'aéroport, qui sont réalisés en enrobés bitumineux (conglomérat bitume/granulats). En effet, ces tarmacs et revêtements d'aéroport sont fréquemment souillés par des égouttures de kérosène, lors du remplissage des réservoirs des avions, par des fuites ou autres déversements accidentels de produits pétroliers. En outre, ils sont également exposés aux différents fluides utilisés par temps froids pour éliminer la glace, le givre et/ou la neige sur les avions et sur les pistes.

Les stations services ainsi que les locaux industriels de dépôts d'hydrocarbures peuvent être également sujets à ce même problème de résistance des revêtements bitumineux aux agents chimiques agressifs que sont les solvants hydrocarbonés et/ou les fluides de déverglaçage/dégivrage/déneigement.

Les chaussées routières conventionnelles sont naturellement elles aussi exposées à ce type d'agressions chimiques.

Pour tenter de remédier à cela, il a été proposé d'incorporer divers additifs dans les compositions bitumineuses. C'est ainsi que le WO-A-02/16499 divulgue l'adjonction de cires, notamment de cires de polyéthylène dans des compositions bitumineuses, en vue de leur conférer une résistance aux agressions des solvants hydrocarbonés.

De manière générale, il apparaît par ailleurs que les propositions techniques antérieures de compositions bitume /polymère, et d'enrobés en contenant, pourraient être améliorées sur le plan de leur résistance aux agressions chimiques (e.g celles des solvants hydrocarbonés), de façon à ne pas être trop rapidement altérées, surtout lorsque ces agressions chimiques se conjuguent aux sollicitations mécaniques importantes.

L'amélioration, de manière simple et économique, de la résistance aux agressions chimiques est d'autant plus difficile à obtenir, que cela ne doit pas se faire au détriment d'une autre propriété essentielle des bitumes, à savoir la résistance à l'eau. Cette résistance à l'eau doit s'exercer lorsque la composition bitume/polymère, forme un liant bitumineux, c'est à dire une matrice incluant des granulats minéraux dans un conglomérat ou enrobé e.g. routier. Dans un tel enrobé, le liant bitumineux, plutôt apolaire et hydrophobe, doit être rendu parfaitement compatible avec les granulats, plutôt polaires et hydrophiles. Pour garder leur cohésion, ces enrobés liants bitumineux / granulats doivent résister à l'eau qui est susceptible d'affecter la liaison bitume/granulat, c'est-à-dire de diminuer l'adhésivité. Il va de soi que le liant a un rôle très important à jouer à cet égard.

Un autre élement dont il faut tenir compte dans la mise au point de compositions bitume/polymère, résistant aux agressions chimiques, est lié à leur préparation. En effet, sachant que l'on cherche à obtenir des compositions très concentrées afin de minimiser les frais de transport, il faut éviter les gélifications intempestives.

Dans ces circonstances, l'un des objectifs essentiels de la présente invention est de proposer :
⇒ de nouvelles compositions bitume/polymère,
⇒ et/ou l'utilisation de nouveaux additifs pour la préparation de telles compositions,
en vue d'améliorer la résistance aux agressions chimiques (e.g. solvants hydrocarbonés, en particulier pétroliers, et produits de dégivrage, déverglaçage et/ou déneigement), sans porter préjudice à la résistance à l'eau des bitumes, et ce de manière simple, économique et performante.

Un autre objectif essentiel de l'invention est de proposer :
⇒ de nouvelles compositions bitume/polymère,
⇒ et/ou l'utilisation de nouveaux additifs pour la préparation de telles compositions,
en vue d'améliorer la résistance aux agressions chimiques, tout en maintenant pour la composition bitume/polymère, un niveau d'adhésivité vis-à-vis de granulats qui soit élevé et pérenne.

Un autre objectif essentiel de l'invention est de proposer :
=> de nouvelles compositions bitume/polymère,
=> et/ou l'utilisation de nouveaux additifs pour la préparation de telles compositions,
pour leur conférer, dès lors qu'elles sont mises en oeuvre pour la préparation de revêtements routiers, en particulier de tarmacs ou de pistes d'aéroports, de stations services ou de dépôts d'hydrocarbures, une meilleure résistance aux hydrocarbures et/ou aux solutions salines et/ou à l'eau.

Un autre objectif essentiel de la présente invention est d'améliorer la résistance aux agressions chimiques de compositions bitume/polymère, par un choix judicieux et avantageux de nouveaux additifs économiques et simples à mettre en oeuvre, ainsi que par un choix judicieux et avantageux des conditions de préparation de telles compositions.

Un autre objectif essentiel de la présente invention est de parfaire la résistance aux agressions chimiques de compositions bitume/polymère, employées pour la réalisation de revêtements routiers, tout en s'attachant à atteindre également les objectifs contradictoires d'amélioration de la résistance de telles compositions bitume/polymères vis-à-vis d'agents chimiques agressifs d'une part, et vis-à-vis de l'eau, d'autre part.

Un autre objectif essentiel de la présente invention est de contribuer à l'amélioration des propriétés des revêtements routiers à base de composition bitume/polymère, et de granulats, de façon à contrôler l'écoulement des hydrocarbures sur ces revêtements, et ce faisant, de lutter contre la pénétration malvenue d'hydrocarbures dans le sol et la pollution incidente des nappes phréatiques.

Ces objectifs, parmi d'autres, sont atteints par l'invention qui concerne en premier l'utilisation d'au moins un composé azoté (3) de masse moléculaire supérieure à 90 et choisi parmi les polyamines à chaîne(s) grasse(s), pour améliorer la résistance aux agressions chimiques causées par des kérosènes ou des gazoles, d'une composition bitume/polymère réticulée ou réticulable comprenant :
(1) au moins un bitume ;
et, en % en poids du bitume :
(2) entre 0,3% et 20% d'au moins un polymère réticulable, et
(4) et une quantité efficace d'un agent de couplage (ou de réticulation), de préférence du type de ceux apte à fournir une quantité de soufre libre représentant entre 0,1 et 20 % du poids du polymère réticulable (2) présent dans le milieu réactionnel, ledit composé azoté (3) étant
   - un mélange complexe de produits pouvant comporter des groupements amine non modifiés et des groupements amide et/ou des éléments à structure formamidine cyclique du type tétrahydropyrimidine obtenus, d'une part, à partir d'un groupement carboxylique fourni par l'acide formique, et, d'autre part, à partir du groupement amine primaire terminal et du groupe amine secondaire le plus proche fournis par des polyalkylène polyamines à chaîne(s) grasse(s) de formule
      **(I)**

         **R-NH-(CH₂-CH₂-CH₂-NH)ₙ-H**
      où R représente une chaîne hydrocarbonée linéaire, saturée et insaturée, pouvant comporter de 8 à 22 atomes de carbone, et n un nombre entier de 1 à 5;
   - utilisé en une quantité comprise entre de 0,1 % et 1 % en poids, rapportée à la quantité de bitume (1) utilisée.

Les inventeurs ont donc eu le mérite de sélectionner un additif (3) azoté particulier, qui, tout en étant présent dans la composition dans une quantité raisonnable et économiquement acceptable, exerce, de manière surprenante et inattendue, dans la composition bitume/polymère, une fonction exacerbée de résistance aux agressions chimiques induites, notamment, par les solvants hydrocarbonés, en particulier pétroliers tels que le kérosène.

La mise à jour de cette nouvelle fonction avantageuse pour ce groupe de composés additifs azotés (3) ouvre la voie à de nouvelles compositions bitume/polymère capable de résister aux agressions chimiques pour conserver une très bonne tenue mécanique, quand elles sont sous forme d'enrobés routiers, utiles entre autres, pour les tarmacs et les pistes d'aéroports, pour les aires de stations services ou pour les dépôts d'hydrocarbures ou autres.

Ces résultats intéressants sont obtenus sans entraîner de modifications significatives dans les procédés de préparation des bitumes/polymères et des enrobés à base desdits bitumes polymères.

L'utilisation d'au moins un composé azoté (3) tel que défini ci-dessus, permet d'améliorer la résistance d'une composition bitume/polymère (1) (2) (3) (4) telle que définie ci-dessus, non seulement vis-à-vis des agents chimiques agressifs mais aussi vis-à-vis de l'eau.

Les agents chimiques agressifs considérés sont par exemple choisis dans le groupe comprenant :
∘ des kérosènes, et des gazoles.

Il est particulièrement inattendu que l'exploitation des propriétés qu'ont les composés azotés (3) de résister à l'action de l'eau, c'est-à-dire d'améliorer l'adhésivité desdites compositions, ait permis de manière corollaire et pourtant contradictoire, d'améliorer également la résistance des compositions bitume/polymère vis-à-vis des hydrocarbures. En effet, il était difficilement prévisible qu'un composé azoté (3) globalement polaire, exprime cette propriété au sein de la composition bitume/polymère.

Ainsi, l'utilisation selon l'invention vise également à améliorer, ou à tout le moins à maintenir à un niveau satisfaisant, la résistance à l'eau de la composition bitume/polymère.

Ce composé azoté (3) spécifique est intégré de manière irréversible au sein de la composition bitume/polymère selon l'invention. A cet égard, la réticulation par incorporation d'un agent de couplage (avantageusement après l'introduction du ou des composés azotés (3) dans la composition) permet de bien stabiliser l'incorporation de l'additif azoté (3) au sein de la composition bitume/polymère.

Selon l'invention, le composé azoté (3) est un mélange complexe de produits pouvant comporter des groupements amine non modifiés et des groupements amide et/ou des éléments à structure formamidine cyclique du type tétrahydropyrimidine obtenus, d'une part, à partir d'un groupement carboxylique fourni par l'acide formique, et, d'autre part, à partir du groupement amine primaire terminal et du groupe amine secondaire le plus proche fournis par des polyalkylène polyamines à chaîne(s) grasse(s) de formule (I) susdéfinis.

Selon l'invention, des candidats de choix pour constituer le ou les composés azotés (3) sont les produits de formule générale (II) : 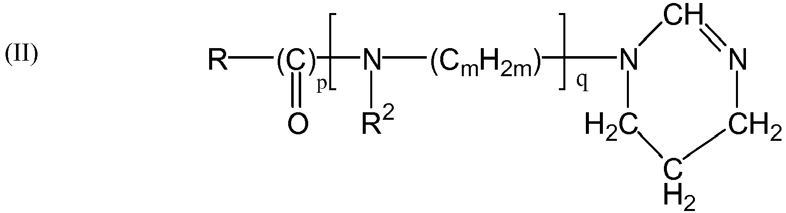 où m désigne un nombre entier allant 2 à 6, de préférence 1 à 4, q représente zéro ou un nombre entier allant de 1 à 6, de préférence 1 à 4, et p est égal à zéro, et R désigne un radical hydrocarboné aliphatique monovalent en C₂ à C₃₀ possédant éventuellement une ou plusieurs insaturations du type C=C.

De manière plus préférée encore, le radical R dans la formule (II) est un radical renfermant une ou plusieurs insaturations, de préférence choisi dans le groupe comprenant : alcényle, alcadiényle, alcatriényle, alcatétraényle ou encore alcapentaényle, et, plus préférentiellement encore, est un radical en C₈ à C₂₀.

En pratique, le radical R est choisi parmi ceux des radicaux R qui renferment 8 à 20 atomes de carbone. Des exemples de radicaux R convenant pour les composés azotés utilisés selon l'invention sont tels que décényl- 9, décadiényl-2,4, décatriényl-2 ,4,6, dodécényl-9, hexadécényl-9, octadécényl-6, octadécényl-11, octadécatriényl-9,12,15, octadécatétraényl-9,11,13,15, octadéca-tétraényl-6,9,12,15, eicosényl-9, eicosényl-11, eicosatétraényl-8,11,14,17, eicosatétraényl-5,8,11, 14, eicosapentaényl-5, 8,11,14,17, docosényl-11, docosényl-13, docosapentaényl-7,19,13,16,17, tétracosényl-15. En fait, les produits de formule (II) peuvent, selon une variante privilégiée, former les composants essentiels du mélange complexe de produits issus de la réaction de (I) avec l'acide formique et pouvant comporter des groupements amine non modifiés et des groupements amide et/ou des éléments à structure formamidine cyclique du type tétrahydropyrimidine.

Suivant une caractéristique avantageuse de l'invention, le ou les composés azotés (3) sont sélectionnés de telle sorte que la composition bitume/polymère présente une résistance R au gazole dans un test DURIEZ modifié de référence, supérieure ou égale à 50% des surfaces recouvertes, de préférence supérieure ou égale à 70%.

Le bitume (1) peut être constitué par un seul type de bitume ou par un mélange de bitumes, tels que ceux que l'on utilise majoritairement dans la préparation des compositions bitume/polymère. Le bitume (1) avantageusement est choisi parmi les bitumes qui possèdent une pénétration, suivant la norme NF T 66004, comprise entre 5 et 500, de préférence 5 et 300 et plus préférentiellement encore 20 et 100. Ces bitumes peuvent être des bitumes soufflés ou semi-soufflés, voire même certaines coupes pétrolières ou des mélanges de bitumes et de distillats sous vide (distillation directe ou de distillation sous pression réduite).

Le polymère réticulable (2) que l'on utilise majoritairement pour préparer les compositions bitume/polymère et que l'on retrouve réticulé dans lesdites compositions, est présent dans la composition bitume/polymère finale en une quantité comprise entre 0,5 et 10 % rapportée au poids du bitume (1).

Il peut être choisi parmi le polyisoprène, le polybutadiène, le caoutchouc butyle, les terpolymères éthylène/ propylène/diène (EPDM).

Avantageusement, ledit polymère réticulable (2) est un copolymère choisi parmi :
- les copolymères statistiques ou séquencés de styrène avec un diène conjugué, de préférence choisi dans le groupe comprenant: butadiène, isoprène, chloroprène, butadiène carboxylé et isoprène carboxylé,
- le groupe d'élastomères coomprenant : le polyisoprène, le polybutadiène, le caoutchouc butyle,
- et les terpolymères éthylène/ propylène / diène.

Plus particulièrement, ce polymère réticulable (2) consiste en un ou plusieurs copolymères choisis parmi les copolymères séquencés, notamment di- ou triséquencés, avec ou sans charnière statistique, de styrène et de butadiène, de styrène et d'isoprène, de styrène et de chloroprène, de styrène et de butadiène carboxylée, ou encore de styrène et d'isoprène carboxylée.
Les copolymères (2) statistiques ou séquencés de styrène et d'un diène se dissolvent très facilement dans les bitumes et confèrent à ces derniers d'excellentes propriétés mécaniques et dynamiques et notamment de très bonnes propriétés de viscoélasticité.
Le copolymère (2) de styrène et de diène conjugué et, en particulier, chacun des polymères précités, possède avantageusement une teneur en styrène allant de 5 % à 50 % en poids.

La masse moléculaire moyenne en poids du copolymère de styrène et de diène conjugué, et plus généralement celle des copolymères (2) mentionnés ci-dessus, peut être comprise, par exemple, entre 10 000 et 600 000 Daltons et se situe de préférence entre 30 000 et 400 000 Daltons.

L'agent de couplage (4) que l'on emploie dans la préparation des compositions bitume/polymère selon l'invention, peut être choisi dans le groupe constitué par le soufre élémentaire, les polysulfures d'hydrocarbyle, les accélérateurs de vulcanisation donneurs de soufre, les mélanges de tels produits entre eux et/ou avec des accélérateurs de vulcanisation non donneurs de soufre.

L'agent de couplage (4) pourra notamment être au moins l'un des agents de couplage décrits dans EP-739 386-B1, EP-799 280-B1 et EP-837 910-B1.

Le soufre élémentaire susceptible d'être utilisé pour constituer, en partie ou en totalité, l'agent de couplage (4) est avantageusement du soufre en fleur et de préférence du soufre cristallisé sous la forme orthorhombique et connu sous le nom de soufre alpha.

Les polysulfures d'hydrocarbyle susceptibles d'être utilisés pour former au moins une partie de l'agent de couplage (4) répondent à la formule générale :
**(III)**

   **R⁷-(S)ᵥ-(R⁹-(S)ᵥ-)_{w}-R⁸**
dans laquelle R⁷ et R⁸ désignent chacun un radical hydrocarboné monovalent, saturé ou insaturé, en C₁ à C₂₀ ou sont reliés entre eux pour constituer un radical hydrocarboné divalent en C₂ à C₂₀, saturé ou insaturé, formant un cycle avec les autres groupements d'atomes associés dans la formule, R⁹ est un radical hydrocarboné divalent, saturé ou insaturé, en C₁ à C₂₀, les -(S)v-représentent des groupements divalents formés chacun de v atomes de soufre, les v pouvant être différents de l'un desdits groupements à l'autre et désignant des nombres entiers allant de 1 à 6 avec au moins l'un des v égal ou supérieur à 2, et w représente un nombre entier prenant les valeurs de zéro à 10.

Des polysulfures préférés répondent à la formule générale R¹⁰-(S) t-R¹⁰ dans laquelle R¹⁰ désigne un radical alkyle en C₆ à C₁₆, et -(S)t- représente un groupement divalent formé par un enchaínement de t atomes de soufre, t étant un nombre entier allant de 2 à 5.

D'autres polysulfures, qui peuvent être utilisés suivant l'invention, sont par exemple tels que trisulfure de diphényle, trisulfure de dibenzyle, tétrasulfure de diphényle, tétrasulfure d'orthotolyle, tétrasulfure de dibenzyle, pentasulfure de dibenzyle, pentasulfure de diallyle, tétraméthyltétrathiane.

Les accélérateurs de vulcanisation donneurs de soufre peuvent être choisis, en particulier, parmi les polysulfures de thiurame de formule générale : 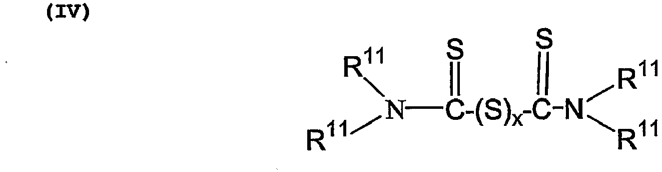 dans laquelle les R¹¹, identiques ou différents, représentent chacun un radical hydrocarboné en C₁ à C₁₂ et de préférence en C₁ à C₈, notamment un radical alkyle, cycloalkyle ou aryle, ou bien deux radicaux, R¹¹ fixés à un même atome d'azote sont reliés entre eux pour former un radical divalent hydrocarboné en C₁ à C₈ et x est un nombre allant de 2 à 8.

Comme autres exemples d'accélateurs de vulcanisation donneurs de soufre on peut encore citer les disulfures d'alkylphénols et les disulfures tels que disulfure de morpholine et N,N'-disulfure de caprolactame.

Les accélérateurs de vulcanisation non donneurs de soufre peuvent être des composés soufrés choisis notamment parmi le mercaptobenzothiazole et ses dérivés, les dithiocarbamates de formule générale : 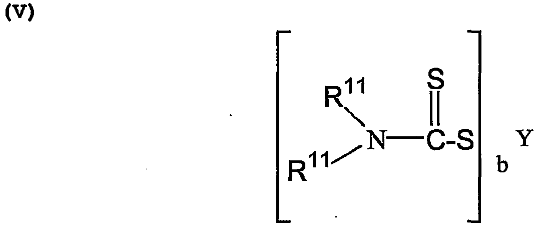 dans laquelle les R¹¹, identiques ou différents, ont la signification donnée plus haut, Y représente un métal et b désigne la valence de Y, et les monosulfures de thiurame de formule générale 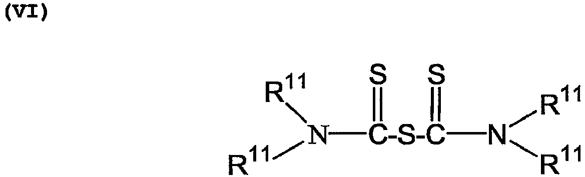 dans laquelle les R¹¹, identiques ou différents, ont la signification donnée plus haut.

D'autres accélérateurs de vulcanisation non donneurs de soufre, qui n'appartiennent pas aux familles définies plus haut, peuvent être également utilisés. De tels accélérateurs de vulcanisation peuvent être tels que diphényl-1,3 guanidine, diorthotolylguanidine et oxyde de zinc, ce dernier composé pouvant être employé éventuellement en présence d'acides gras du type acide stéarique, acide éthylcaproique, acide laurique.

Pour plus de détails concernant l'agent de couplage, on peut se réferer au paragraphes 24 à 35 du EP-739 386 B1, ainsi qu'à EP 360 656 et EP 409 683.

Rapportées en poids du bitume, les proportions préférées de polymère (2) et de composé azoté (3) présents dans la composition bitume/polymère représentent 0,7 à 10% et 0,1 à 5% respectivement.

La composition bitume/polymère peut encore renfermer 1 à 30% et plus particulièrement 3 à 20 %, en poids du bitume (1), d'un agent fluxant, qui peut consister, notamment, en une huile hydrocarbonée présentant un intervalle de distillation à pression atmosphérique, déterminé selon la norme ASTM D 86- 67, compris entre 100°C et 450°C et situé plus spécialement entre 150°C et 380°C. Une telle huile hydrocarbonée peut être, par exemple, une coupe pétrolière de caractère aromatique, une coupe pétrolière de caractère naphténo-aromatique, une coupe pétrolière de caractère naphténo- paraffinique, une coupe pétrolière de caractère paraffinique ou encore une huile d'origine végétale.

La composition bitume/polymère concernée par l'utilisation selon l'invention est avantageusement préparée comme suit :
on met en contact, en opérant à une température comprise entre 100°C et 230°C et sous agitation pendant une durée d'au moins 10 minutes :
   (1) un bitume et,
      comptés en poids du bitume,
   (2) 0,5 à 15%, et de préférence 0,7 à 10%, d''au moins un polymère,
   (3) 0,05 à 10%, et de préférence 0,1 à 5%, d'au moins un composé azoté tel que défini ci-dessus et,
   (4) une quantité efficace d'au moins un agent de couplage apte à fournir une quantité de soufre libre représentant 0,1 à 10% du poids global de polymère (2) et de composé azoté (3) dans ledit milieu;
le bitume (1), le polymère (2), le ou les composés azotés (3) et l'agent de couplage (4) étant tels que définis ci-avant.

L'invention vise également le procédé de préparation de la composition bitume/polymère, pris en tant que tel et défini ci-dessus.

Selon une mise en oeuvre préférée du procédé de préparation de la composition bitume/polymère de l'invention, l'agent de couplage (4) est ajouté après mise en contact du bitume (1), du polymère (2) et du composé azoté (3).

En accord avec ce mode préféré, on réalise tout d'abord, à une température comprise entre 100°C et 230°C et sous agitation, un mélange des divers ingrédients constituant le mélange réactionnel, à savoir bitume (1), polymère (2) et composé azoté (3) dans un premier temps, puis agent de couplage (4), dans un second temps, puis on maintient le mélange réactionnel obtenu, dans ledit intervalle de température pendant une durée d'au moins 10 minutes et généralement allant de 10 minutes à 5 heures, pour former un produit de réaction constituant la composition bitume/polymère.

Selon une mise en oeuvre plus particulièrement préférée du procédé selon l'invention, le polymère (2) est mis en contact avec le bitume (1), dans les proportions choisies, à une température entre 100°C et 230°C et sous agitation, pendant une durée suffisante, généralement de l'ordre de quelques dizaines de minutes à quelques heures, pour former un mélange homogène. Puis, au mélange obtenu on ajoute le composé azoté (3) et enfin l'agent de couplage (4). On maintient le tout sous agitation à une température comprise entre 100°C et 230°C, par exemple correspondant à la température de mise en contact du polymère (2) avec le bitume (1), pendant une durée au moins égale à 10 minutes et généralement allant de 10 à 180 minutes.

Les quantités de polymère (2), de composé azoté (3) et d'agent de couplage (4) ajoutées au bitume (1) sont choisies pour être comprises dans les intervalles définis précédemment pour ces quantités.

Lorsque l'on produit une composition bitume/polymère selon l'invention renfermant un agent de fluxage, ce dernier peut être ajouté au milieu réactionnel, que l'on constitue à partir du bitume (1), du polymère (2), du composé azoté (3) et de l'agent de couplage (4), à un moment quelconque de la constitution dudit milieu réactionnel, la quantité d'agent de fluxage étant choisie pour être comprise dans les intervalles définis précédemment pour cette quantité.

Selon une forme avantageuse de réalisation de ce type de composition bitume/polymère, le polymère (2), l'agent de couplage (4) et éventuellement le composé azoté (3) sont incorporés au bitume (1) sous la forme d'une solution mère de ces produits dans un agent fluxant et en particulier dans l'huile hydrocarbonée définie précédemment comme susceptible de constituer un agent fluxant. Si il n'est pas présent dans la solution mère, le composé azoté (3) peut être incorporé au bitume (1) avant, pendant ou après incorporation de la solution mère à ce dernier.

La solution mère est préparée par mise en contact des ingrédients la composant, à savoir agent fluxant servant de solvant, polymère (2), composé azoté (3) et agent de couplage (4), sous agitation, à des températures comprises entre 20 et 170°C et plus particulièrement entre 40 et 120°C, pendant un temps suffisant, par exemple d'environ 30 minutes à environ 180 minutes, pour obtenir une dissolution complète du polymère (2), du composé azoté (3) et de l'agent de couplage (4) dans l'agent fluxant.

Les concentrations respectives du polymère (2), du composé azoté (3) et de l'agent de couplage (4) dans la solution mère peuvent varier assez largement en fonction notamment de la nature de l'agent fluxant utilisé pour dissoudre le polymère (2), le composé azoté (3) et l'agent de couplage (4). Ainsi les quantités respectives de polymère (2), de composé azoté (3) et d'agent de couplage (4) peuvent représenter avantageusement 5% à 40%, 0,5% à 25% et 0,01 à 10% du poids de l'agent de fluxage.

Une solution mère préférée renferme, comptés en pourcentage en poids de l'agent de fluxage, 10 à 35% de polymère (2), 1 à 20% de composé azoté (3) et 0,05 à 5% d'agent de couplage (4).

Pour préparer la composition bitume/polymère en utilisant la solution mère, on mélange la solution mère du polymère, du composé azoté (3) et de l'agent de couplage (4) dans l'agent fluxant avec le bitume, en opérant à une température comprise entre 100°C et 230°C et sous agitation, ceci étant réalisé par exemple en ajoutant la solution mère au bitume maintenu sous agitation à la température choisie entre 100°C et 230°C. Puis on maintient le mélange résultant sous agitation à une température comprise entre 100 et 230°C, pendant une durée au moins égale à 10 minutes, pour permettre à l'agent de couplage (4)et au composé azoté (3) d'agir.

La quantité de solution mère mélangée au bitume est choisie pour fournir les quantités désirées, par rapport au bitume, de polymère, de composé azoté (3) et d'agent de couplage (4), lesdites quantités étant dans les fourchettes définies précédemment.

Selon un autre de ses objets, la présente invention concerne l'utilisation d'une composition bitume/polymère (1)(2)(3)(4) telle que définie ci-dessus pour améliorer la résistance aux solvants hydrocarbonés (pétroliers) de revêtements, notamment de revêtements superficiels routiers, d'enrobés bitumineux ou de revêtements d'étanchéité.

Selon encore un autre de ses objets, la présente invention concerne l'utilisation d'une composition bitume/polymère (1)(2)(3)(4) telle que définie ci-dessus pour améliorer la résistance aux agressions chimiques [par exemple celles causées par des solvants hydrocarbonés (pétroliers)], voire à l'eau, de revêtements, notamment de revêtements superficiels routiers, d'enrobés bitumineux ou de revêtements d'étanchéité.

Les compositions bitume/polymère obtenues conformément à l'utilisation selon l'invention peuvent être utilisées telles quelles ou bien diluées en des proportions variables avec un bitume ou un mélange de bitumes, et/ou encore avec des compositions conforme à l'invention ayant des caractéristiques différentes.

Les liants bitume/polymère comprenant une ou plusieurs compositions bitume/polymère obtenues conformément à l'utilisation selon l'invention ou résultant de la dilution desdites compositions par un bitume ou un mélange de bitumes et/ou par une autre composition bitume/polymère obtenue conformément à l'utilisation selon l'invention, jusqu'aux teneurs désirées respectivement en polymère réticulé (2) et en composé azoté (3), sont applicables, directement ou après mise en émulsion aqueuse, à la réalisation de revêtements routiers du type enduit superficiel, à la production d'enrobés mis en place à chaud ou à froid, ou encore à la réalisation de revêtements d'étanchéité.

On notera que la dilution d'une composition conforme à l'utilisation selon l'invention avec un bitume ou un mélange de bitumes, et/ou encore avec une composition bitume/polymère différente, peut être réalisée aussitôt après l'obtention de cette composition, lorsqu'une utilisation quasi-immédiate des liants bitume/polymère résultants est requise, ou après une durée de stockage plus ou moins prolongée des compositions bitume/polymère, lorsqu'une utilisation différée des liants bitume/polymère résultants est envisagée. Le bitume ou mélange de bitumes utilisé pour la dilution peut être choisi parmi les bitumes définis précédemment comme convenant à la préparation des compositions bitume/polymère.

L'invention concerne en outre un procédé de réparation ou entretien des chaussées consistant essentiellement au répandage dans un laps de temps n'excédant pas 2 minutes de liant chaud ou sous forme d'émulsion et des granulats.

L'invention concerne enfin un procédé de préparation d'enrobés consistant essentiellement à mélanger la composition conforme à l'utilisation selon l'invention avec des granulats, de préférence à une température comprise entre 0°C et 500°C, et, plus préférentiellement encore à une température comprise entre 50°C et 200°C.

Les exemples qui suivent et qui n'ont pas de caractère limitatif sont destinés à illustrer les propriétés améliorées de résistance aux solvants pétroliers et à l'eau des compositions obtenues selon l'utilisation conforme à l'invention.

### EXEMPLES

### I/ Exemples mettant en évidence l'amélioration de la résistance aux hydrocarbures (gazole) de compositions bitumes/polymères traitées conformément à l'utilisation selon l'invention

### I.1 PRODUITS

### • Base bitume (1)

Un bitume de pénétrabilité 50/70 est introduit dans un réacteur en verre à double enveloppe chauffé par fluide caloporteur, jusqu'à atteindre la température de 175°C. L'agitation est maintenue pendant 15 minutes puis le produit est transféré du réacteur dans une boîte métallique.
- Polymère (2) = polymère styrène-butadiène de masse 120 000 et de rapport en poids styrène/butadiéne égale à 75/25.
- Additif composé azoté (3) =Polyram® L200 commercialisé par la société CECA.
- Agent de couplage (4) : soufre.

### I.2 Formulations

### Formulation 1

Le bitume de pénétrabilité 50/70 est introduit dans un réacteur en verre à double enveloppe chauffé par fluide caloporteur, jusqu'à atteindre la température de 175°C. L'additif azoté est introduit dans la masse bitumineuse sous agitation. L'agitation est maintenue pendant 15 minutes après introduction. Le produit ainsi obtenu est transféré du réacteur dans une boîte métallique.

### Formulation 2

Le bitume de pénétrabilité 50/70 est introduit dans un réacteur en verre à double enveloppe chauffé par fluide caloporteur, jusqu'à atteindre la température de 175°C. Le polymère est introduit sur un laps de temps de 3 minutes puis l'agitation est maintenue pendant 3 heures et la température régulée à 175°C. Le soufre est introduit sur un laps de temps de 15 secondes et l'agitation est maintenue 2 heures et la température régulée à 175°C. Le produit ainsi obtenu est transféré du réacteur dans une boîte métallique.

### Formulation 3

Le bitume de pénétrabilité 50/70 est introduit dans un réacteur en verre à double enveloppe chauffé par fluide caloporteur, jusqu'à atteindre la température de 175°C. Le polymère est introduit sur un laps de temps de 3 minutes puis l'agitation est maintenue pendant 3 heures et la température régulée à 175°C. L'additif azoté est ajouté sur un laps de temps de 10 secondes. L'agitation est maintenue pendant 10 minutes et la température régulée à 175°C. Le soufre est ensuite introduit sur un laps de temps de 15 secondes et l'agitation est maintenue 2 heures et la température régulée à 175°C. Le produit ainsi obtenu est transféré du réacteur dans une boîte métallique.

### Formulation 4

Le bitume de pénétrabilité 50/70 est introduit dans un réacteur en verre à double enveloppe chauffé par fluide caloporteur, jusqu'à atteindre la température de 175C°. Le polymère est introduit sur un laps de temps de 3 minutes puis l'agitation est maintenue pendant 3 heures et la température régulée à 175°C. Le soufre est introduit sur un laps de temps de 15 secondes et l'agitation est maintenue 2 heures et la température régulée à 175°C. L'additif azoté est ajouté sur un laps de temps de 10 secondes. L'agitation est maintenue pendant 10 minutes et la température régulée à 175°C. Le produit ainsi obtenu est transféré du réacteur dans une boîte métallique.

### II - EVALUATION

Les formulations obtenues sont caractérisées d'après leur pénétrabilité (Norme NF EN 1426), température de ramollissement bille et anneau (Norme NF EN 1427), retour élastique (Norme NF EN 13398) et résistance aux hydrocarbures (gazole) selon la méthode Duriez Modifié, dérivée de la norme NF P 9825-1.

### A Préparation des éprouvettes Duriez

Des éprouvettes Duriez sont préparées avec chacune des formulations 1 à 4 décrites ci-dessus:
- Réchauffer pendant au moins deux heures chaque formulation utilisée et des granulats, ainsi que les moules Duriez et une gamelle identique à celle utilisée lors des essais Duriez classiques.
   La température de réchauffage sera de 180°C +/- 5°C pour les bitumes/polymères selon l'invention et de 150°C +/-5°C pour les bitumes classiques.
- Introduire les granulats dans la gamelle et replacer l'ensemble à l'étuve pendant au moins une heure.
- Couler dans la gamelle contenant les granulats, la formululation.
- Mélanger le tout au malaxeur jusqu'à ce que la formulation soit entièrement recouverte par les granulats.

L'enrobé obtenu est introduit dans les moules Duriez à raison de 1000 g +/- 2 g par éprouvette.

On dispose un disque de papier entre l'enrobé et les deux pistons du moule afin d'éviter que l'éprouvette colle aux pistons au démoulage.

Les moules sont ensuite réintroduit dans l'étuve pendant une durée minimum de 1 heure et maximum de 2 h 30.

Après une heure, les moules Duriez sont sortis de l'étuve et compactés un à un sur la presse Jacottet (A019) à 6 tonnes +/- 0.2 tonnes pendant 5 min +/- 10 secondes.

Les moules sont ensuite laissés à température ambiante.

### B Décompactage des éprouvettes Duriez

Le lendemain les éprouvettes Duriez sont démoulées au moyen de la presse Jacottet.

Les éprouvettes pourront être mesurées à 0,05 mm près et pesées à 0,2 g près afin de déterminer la compacité de l'enrobé.

Après avoir été démoulées, les éprouvettes devront être écrasées dans un délai maximum de trois semaines.

### C Immersion dans gazole et écrasement des éprouvettes Duriez

Un lot composé d'au moins 3 éprouvettes sera immergé dans le gazole à 18°C +/- 2°C pendant 24 heures +/- 20 mn. Un autre lot composé d'au moins 2 éprouvettes sera conservé dans l'air à la même température durant le même temps. Après 24 heures +/- 20 mn, les éprouvettes seront écrasées sur la presse Jacottet. La force nécessaire à l'écrasement sera relevée sur l'ordinateur.

### D Interprétation des résultats

La moyenne de la force nécessaire à l'écrasement sera calculée pour les éprouvettes ayant été conservé dans l'air et pour les éprouvettes ayant été immergé dans le solvant. Cette force sera notée avec l'écart-type.

Un ratio sera calculé entre ces deux forces.

### III - RESULTATS

Les résultats sont consignés dans le tableau 1 ci-dessous

| | **Base bitume** | **Formulation 1** | **Formulation 2** | **Formulation 3** | **Formulation 4** |
|---|---|---|---|---|---|
| | | | | | |
| **Composition** | | | | | |
| (1) % 50/70 - M0210 | 100 | 99,7 | 93,83 | 93,53 | 93,53 |
| | | | | | |
| (2) % Polymère SB | | | 6 | 6 | 6 |
| (3) % Polyram® L200 - | | 0,3 | | 0.3 avant S | 0.3 après S |
| | | | | | |
| (4) % soufre- | | | 0,17 | 0,17 | 0,17 |

| **Caractérisation** | | | | | |
|---|---|---|---|---|---|
| *sur liant tel quel* | | | | | |
| Pénétrabilité (1/10 mm) | 58 | 56 | 47 | 48 | 49 |
| TBA (°C) | 48,2 | 49,6 | 71,8 | 71,0 | 69,4 |
| Retour élastique (%) | 12 | 12 | 90 | 91 | 91 |

| *Essai Duriez Modifié* | | | | | |
|---|---|---|---|---|---|
| Conservation dans l'air (R) | 4,6 | 4,6 | 5,2 | 5,3 | 5,3 |
| Ecart-type | 0,1 | 0,1 | 0,2 | 0,2 | 0,1 |
| conservation dans le gazole 24h (r) | 2,4 | 2,4 | 3,2 | 3,6 | 3,5 |
| Ecart-type | 0,2 | 0,0 | 0,4 | 0,2 | 0,2 |
| r/R | 52% | 51% | 61% | 68% | 65% |

Commentaires sur les résultats :
- le bitume de base conduit à une résistance au gazole très faible.
- l'ajout d'un additif composé azoté (3) dans le bitume sans réticulation à l'aide de soufre (4) améliore très peu la résistance au gazole.
- le bitume polymère réticulé permet une augmentation significative de la résistance au gazole.
- L'ajout de l'additif azoté (3) après réaction au Soufre permet d'augmenter cette résistance au gazole.
- L'ajout de l'additif azoté (3) avant réaction au Soufre permet d'augmenter très nettement la résistance au gazole.

Il est ainsi démontré que la réaction de l'additif composé azoté (3) avec l'agent de couplage conduit à des propriétés améliorées par rapport à une additivation a posteriori de la réaction de couplage.

## Revendications

1. Utilisation d'au moins un composé azoté (3) de masse moléculaire supérieure à 90 et choisi parmi les polyamines à chaîne(s) grasse(s), pour améliorer la résistance aux agressions chimiques causées par des kérosènes ou des gazoles, d'une composition bitume/polymère réticulée ou réticulable comprenant :
(1) au moins un bitume ;
et, en % en poids du bitume :
(2) entre 0,3% et 20% d'au moins un polymère réticulable, et (4) et une quantité efficace d'un agent de couplage (ou de réticulation),
ledit composé azoté (3) étant
- un mélange complexe de produits comportant des groupements amine non modifiés et des groupements amide et/ou des éléments à structure formamidine cyclique du type tétrahydropyrimidine obtenus, d'une part, à partir d'un groupement carboxylique fourni par l'acide formique, et, d'autre part, à partir du groupement amine primaire terminal et du groupe amine secondaire le plus proche fournis par des polyalkylène polyamines à chaîne(s) grasse(s) de formule :
**(I)**
**R-NH-(CH₂-CH₂-CH₂-NH)ₙ-H**
où R représente une chaîne hydrocarbonée linéaire, saturée et insaturée, comportant de 8 à 22 atomes de carbone, et n un nombre entier de 1 à 5,
- utilisé en une quantité comprise entre de 0.1 % et 1 % en poids, rapportée à la quantité de bitume (1) utilisée.

2. Utilisation selon la revendication 1 **caractérisée en ce que** l'agent de couplage (ou de réticulation) est du type de ceux aptes à fournir une quantité de soufre libre représentant entre 0.1 et 20 % du poids du polymère réticulable.

3. Utilisation selon l'une des revendications précédentes, **caractérisée en ce que** le composé azoté (3) est un produit de formule générale (II) : 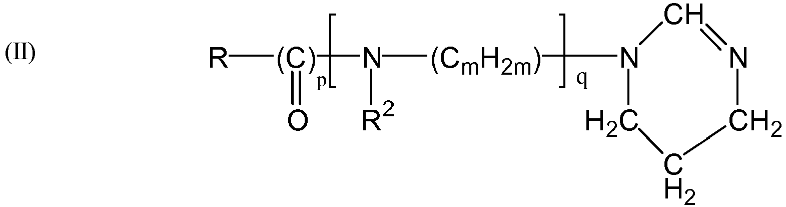 où m désigne un nombre entier allant 2 à 6, q représente zéro ou un nombre entier allant de 1 à 6, et p est égal à zéro, et R désigne un radical hydrocarboné aliphatique monovalent en C₂ à C₃₀ possédant éventuellement une ou plusieurs insaturations du type C=C.

4. Utilisation selon l'une des revendications 1 à 3, **caractérisée en ce que** le bitume (1) a une pénétration, suivant la norme NF T 66004, comprise entre 5 et 500.

5. Utilisation selon l'une quelconque des revendications 1 à 4, **caractérisée en ce que** le polymère réticulable (2) est un copolymère de styrène et de diène conjugué dont la teneur pondérale en styrène va de 5 % à 50 %.

6. Utilisation selon l'une des revendications 1 à 5, **caractérisée en ce que** l'agent de couplage (4) représente entre 0.5 et 10 % du poids du polymère réticulable (2).

7. Utilisation de la composition bitume/polymère telle que définie dans l'une quelconque des revendications 1 à 6, pour améliorer la résistance aux agressions chimiques causées par des kérosènes ou des gazoles, de revêtements superficiels routiers, d'enrobés bitumineux ou de revêtements d'étanchéité.

8. Utilisation selon l'une des revendications 1 à 7, **caractérisée en ce que** la composition bitume/polymère est préparée comme suit :
on met en contact, en opérant à une température comprise entre 100°C et 230°C et sous agitation pendant une durée d'au moins 10 minutes :
(1) un bitume et, comptés en poids du bitume,
(2) 0,5 à 15%, d'au moins un polymère,
(3) 0,1 à 10%, d'au moins un composé azoté tel que défini dans les revendications 1 et 3,
(4) une quantité efficace d'au moins un agent de couplage apte à fournir une quantité de soufre libre représentant 0,1 à 10% du poids global de polymère (2) et de composé azoté (3) dans ledit milieu;
le bitume (1), le polymère (2), le ou les composés azotés (3) et l'agent de couplage (4) étant tels que définis ci-avant.

9. Application directe ou après mise en émulsion aqueuse des liants bitume/polymère comprenant au moins une composition bitume/polymère obtenue conformément à l'utilisation selon l'une quelconque des revendications 1 à 8 et respectant les teneurs en polymère réticulé (2) et en composé azoté (3) selon l'une quelconque des revendications 1 à 8, à la réalisation de revêtements routiers du type enduit superficiel, à la production d'enrobés mis en place à chaud ou à froid, ou encore à la réalisation de revêtements d'étanchéité.

## Patentansprüche

1. Verwendung von mindestens einer stickstoffhaltigen Verbindung (3) mit einer Molekülmasse von mehr als 90 und ausgewählt aus Polyaminen mit (einer) Fettkette(n) zur Verbesserung der Beständigkeit gegenüber chemischen Angriffen, die durch Kerosine oder Dieselkraftstoffe verursacht werden, einer Bitumen/vernetztes oder vernetzbares Polymer-Zusammensetzung, umfassend:
(1) mindestens ein Bitumen
und, in % bezogen auf das Gewicht des Bitumens:
(2) zwischen 0,3% und 20% mindestens eines vernetzbaren Polymers und
(4) eine wirksame Menge eines Kupplungs(oder Vernetzungs-)mittels,
wobei die stickstoffhaltige Verbindung (3)
- ein komplexes Gemisch von Produkten ist, die unmodifizierte Amingruppen und Amidgruppen und/oder Einheiten mit zyklischer Formamidinstruktur des Tetrahydropyrimidin-Typs tragen, die aus einerseits einer von Ameisensäure bereitgestellten Carboxylgruppe und andererseits der endständigen primären Amingruppe und der am nächsten gelegenen sekundären Amingruppe erhalten werden, die durch Polyalkylenpolyamine mit (einer) Fettkette(n) der Formel:
**(I)**
**R-NH-(CH₂-CH₂-CH₂-NH)ₙ-H**,
worin R eine gerade, gesättigte und ungesättigte Kohlenwasserstoffkette mit 8 bis 22 Kohlenstoffatomen und n eine ganze Zahl von 1 bis 5 darstellt, bereitgestellt werden,
- in einer Menge zwischen 0,1 Gew.-% und 1 Gew.-%, bezogen auf die verwendete Menge an Bitumen (1), verwendet wird.

2. Verwendung nach Anspruch 1 **dadurch gekennzeichnet, dass** das Kupplungs(oder Vernetzungs-)mittel vorzugsweise von dem Typ ist, der zum Bereitstellen einer Menge an freiem Schwefel, die zwischen 0,1 und 20 Gew.-%, bezogen auf das Gewicht des vernetzbaren Polymers, ausmacht, geeignet ist.

3. Verwendung nach einem der vorhergehenden Ansprüche, **dadurch gekennzeichnet, dass** die stickstoffhaltige Verbindung (3) ein Produkt der allgemeinen Formel (II) ist: 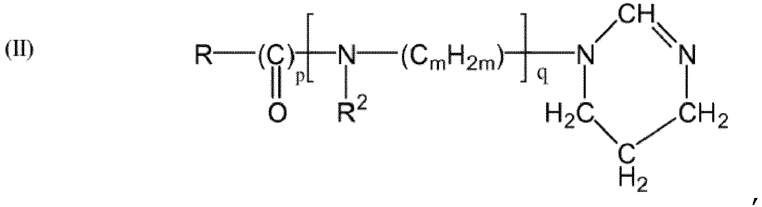 worin m für eine ganze Zahl von 2 bis 6 steht, q null oder eine ganze Zahl von 1 bis 6 darstellt und p gleich null ist und R für einen einwertigen aliphatischen C₂ bis C₃₀ Kohlenwasserstoffrest steht, der gegebenenfalls eine oder mehrere Ungesättigtheiten des Typs C=C besitzt.

4. Verwendung nach einem der Ansprüche 1 bis 3, **dadurch gekennzeichnet, dass** das Bitumen (1) eine Eindringtiefe gemäß der Norm NF T 66004 zwischen 5 und 500 besitzt.

5. Verwendung nach einem der Ansprüche 1 bis 4, **dadurch gekennzeichnet, dass** das vernetzbare Polymer (2) ein Copolymer von Styrol und konjugiertem Dien mit einem Gehalt an Styrol, bezogen auf Gewicht, von 5 Gew.-% bis 50 Gew.-% ist.

6. Verwendung nach einem der Ansprüche 1 bis 5, **dadurch gekennzeichnet, dass** das Kupplungsmittel (4) zwischen 0,5 und 10 Gew.-%, bezogen auf das Gewicht des vernetzbaren Polymers (2), ausmacht.

7. Verwendung der Bitumen/Polymer-Zusammensetzung nach einem der Ansprüche 1 bis 6 zur Verbesserung der Beständigkeit gegenüber chemischen Angriffen, die durch Kerosine und Dieselkraftstoffe verursacht werden, von Straßenoberflächenbeschichtungen, bituminösem Mischgut oder Dichtungsbeschichtungen.

8. Verwendung nach einem der Ansprüche 1 bis 7, **dadurch gekennzeichnet, dass** die Bitumen/Polymer-Zusammensetzung wie folgt hergestellt wird:
Inkontaktbringen, wobei man bei einer Temperatur zwischen 100°C und 230°C und unter Rühren arbeitet, für einen Zeitraum von mindestens 10 Minuten:
(1) eines Bitumens und,
berechnet in Bezug auf das Gewicht des Bitumens,
(2) 0,5 bis 15% mindestens eines Polymers,
(3) 0,1 bis 10% mindestens einer stickstoffhaltigen Verbindung nach den Ansprüchen 1 und 3 und
(4) einer wirksamen Menge mindestens eines Kupplungsmittels, das in der Lage ist, eine Menge an freiem Schwefel, die 0,1 bis 10 Gew.-%, bezogen auf das Gesamtgewicht von Polymer (2) und stickstoffhaltiger Verbindung (3) in dem Medium, ausmacht, bereitzustellen;
wobei das Bitumen (1), das Polymer (2) die stickstoffhaltige Verbindung oder die stickstoffhaltigen Verbindungen (3) und das Kupplungsmittel (4) wie hier vorstehend definiert sind.

9. Aufbringen, direkt oder nach Einbringen in eine wässrige Emulsion, von Bitumen/Polymer-Bindemitteln, die mindestens eine Bitumen/Polymer-Zusammensetzung umfassen, die gemäß der Verwendung nach einem der Ansprüche 1 bis 8 und unter Einhaltung der Gehalte an vernetztem Polymer (2) und an stickstoffhaltiger Verbindung (3) nach einem der Ansprüche 1 bis 8 erhalten wird, zur Herstellung von Straßenbelägen des Typs einer Oberflächenbehandlung, zur Produktion von Heißmisch- oder Kaltmischasphalt oder zur Herstellung von Dichtungsbeschichtungen.

## Claims

1. Use of at least one nitrogen-containing compound (3) with a molecular mass greater than 90 and selected from the fatty chain polyamines, in order to improve resistance to chemical attacks caused by kerosenes or gas oils, of a cross-linked or cross-linkable bitumen/polymer composition comprising:
(1) at least one bitumen;
and, in % by weight of the bitumen:
(2) between 0.3% and 20% of at least one cross-linkable polymer, and
(4) an effective quantity of a coupling (or cross-linking) agent,
said nitrogen-containing compound (3) being
- a complex mixture of products comprising unmodified amine groups and amide groups and/or elements with a cyclic formamidine structure of the tetrahydropyrimidine type obtained, on the one hand, from a carboxylic group provided by formic acid, and, on the other hand, from the terminal primary amine group and the closest secondary amine group provided by fatty chain polyalkylene polyamines of formula :
**(I)**
**R-NH-(CH₂-CH₂-CH₂-NH)ₙ-H**
where R represents a linear hydrocarbon chain, saturated and unsaturated, comprising from 8 to 22 carbon atoms, and n an integer from 1 to 5,
- used in a quantity comprised between 0.1% and 1% by weight, relative to the quantity of bitumen (1) used.

2. Use according to claim 1 **characterized in that** the coupling (or cross-linking) agent is of the type of those capable of providing a quantity of free sulphur representing between 0.1 and 20% of the weight of the cross-linkable polymer.

3. Use according to one of the preceding claims, **characterized in that** the nitrogen-containing compound (3) is a product of general formula (II) : 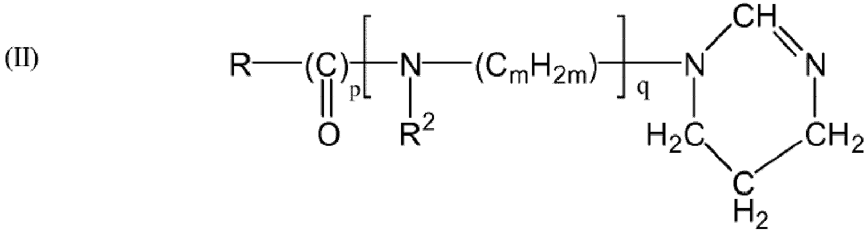 where m denotes an integer ranging from 2 to 6, q represents zero or an integer ranging from 1 to 6, and p is equal to zero, and R denotes an monovalent aliphatic C2 to C30 hydrocarbon radical optionally having one or more unsaturations of the C=C type.

4. Use according to one of claims 1 to 3, **characterized in that** the bitumen (1) has a penetration, according to the standard NF T 66004, comprised between 5 and 500.

5. Use according to any one of claims 1 to 4, **characterized in that** the cross-linkable polymer (2) is a conjugated styrene and diene copolymer the styrene content by weight of which ranges from 5% to 50%.

6. Use according to one of claims 1 to 5, **characterized in that** the coupling agent (4) represents between 0.5 and 10% of the weight of the cross-linkable polymer (2).

7. Use of the bitumen/polymer composition as defined in any one of claims 1 to 6, in order to improve the resistance to chemical attacks caused by kerosenes or gas oils, of road surface coatings, of bituminous mixes or of sealing membranes.

8. Use according to one of claims 1 to 7, **characterized in that** the bitumen/polymer composition is prepared as follows:
operating at a temperature comprised between 100°C and 230°C and under stirring for a duration of at least 10 minutes, the following are brought into contact:
(1) a bitumen and,
with respect to the weight of the bitumen,
(2) 0.5 to 15% of at least one polymer,
(3) 0.1 to 10% of at least one nitrogen-containing compound as defined in claims 1 and 3,
(4) an effective quantity of at least one coupling agent capable of providing a quantity of free sulphur representing 0.1 to 10% of the overall weight of polymer (2) and of nitrogen-containing compound (3) in said medium;
the bitumen (1), the polymer (2), the nitrogen-containing compound(s) (3) and the coupling agent (4) being as defined above.

9. Direct application, or application after being put into aqueous emulsion, of the bitumen/polymer binders comprising at least one bitumen/polymer composition obtained according to the use according to any one of claims 1 to 8 and respecting the contents of the cross-linked polymer (2) and nitrogen-containing compound (3) according to any one of claims 1 to 8, in the production of road surfaces of the surface dressing type, in the production of mixes applied hot or cold, or also in the production of sealing membranes.
